# EUROPEAN PATENT SPECIFICATION

(11) **EP 2 154 805 B1**
(45) Date of publication and mention of the grant of the patent: **11.10.2017**
(21) Application number: 08784067.4
(22) Date of filing: 21.08.2008
(51) Int. Cl.: H04L 1/16

(54) **A METHOD AND A DEVICE OF DISTRIBUTING TFIS AND DISTINGUISHING FEEDBACK INFORMATION**
METHODE UND VERFAHREN ZUR VERTEILUNG VON TFI UND UNTERSCHEIDUNG VON RÜCKFÜHRUNGSINFORMATION
PROCÉDÉ ET DISPOSITIF DE DISTRIBUTION DE TFI ET DE DIFFÉRENCIATION D'INFORMATIONS DE RÉTROACTION

(30) Priority: 21.08.2007 CN 200710145280
(43) Date of publication of application: 17.02.2010
(73) Proprietor: Huawei Technologies Co., Ltd., Longgang District Shenzhen, Guangdong 518129 (CN)
(72) Inventor: WANG, Zhixi, Longgang District 518129 Shenzhen (CN); FANG, Ming, Longgang District 518129 Shenzhen (CN)
(74) Representative: Kreuz, Georg Maria
(86) International application number: PCT/CN2008/072076
(87) International publication number: WO 2009/024091

(56) References cited:
- CN-A- 1 187 929
- CN-A- 1 470 137
- US-A1- 2004 058 687
- US-A1- 2006 092 871
- "Discussion on Fast Ack/Nack Report (Doc. No. TDoc GP-070172)" INTERNET CITATION 12 February 2007 (2007-02-12), XP007905663 Retrieved from the Internet: URL:http://www.3gpp.org/ftp/tsg_geran/TSG_ GERAN/GERAN_33_Seoul/Docs/GP-07 0172.zip [retrieved on 2008-09-15]

## Description

### FIELD OF THE INVENTION

The present invention relates to wireless communications, and more particularly to a piggybacked acknowledged/non-acknowledged (PAN) feedback technology.

### BACKGROUND OF THE INVENTION

In a global mobile communication (GSM) system, a general packet radio service (GPRS) system, or an enhanced GPRS (EGPRS) system, one time division multiple access (TDMA) frame is composed of 8 bursts, and one frame takes approximately 5 ms (60/13 ms). A minimum scheduling unit for data transmission in the physical layer is a radio block, and each block is composed of 4 bursts located in 4 continuous TDMA frames, so that a transmission time interval (TTI) for each block is 20 ms. The block described herein is also called a BTTI block. In upper layers above the physical layer, each logic link control (LLC) frame is composed of a series of radio link control (RLC) data blocks, and each RLC data block has a corresponding block sequence number (BSN) and is transmitted sequentially according to the BSN. In practice, only when correctly receiving all the RLC data blocks of an LLC frame, will a data receiver submit the LLC frame to its upper layer for processing. In order to ensure that an RLC data block can correctly reach the data receiver, the data receiver may periodically send an Ack/Nack report to a data sender by requesting the data sender whether the RLC data block is correctly received; alternatively, when the data sender polls, the data receiver sends an Ack/Nack report to the data sender so as to notify the data sender that which RLC data blocks are correctly received and which RLC data blocks are not correctly received. Upon receiving the feedback Ack/Nack report, the data sender may retransmit the RLC data block, which is incorrect or lost, to the data receiver.

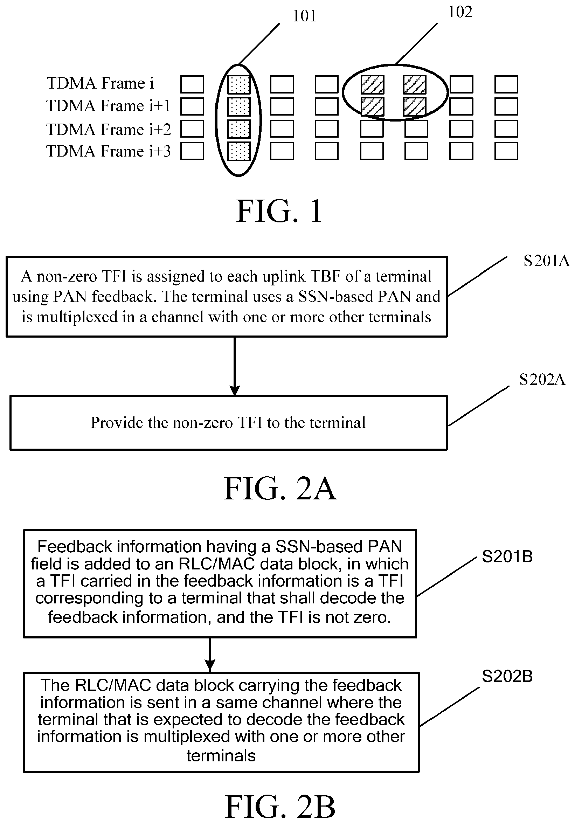

Currently, one of the targets of the evolution of GPRS and EGPRS is to reduce transmission delay. In order to reduce the TTI delay of a block, a reduced TTI (RTTI) technology was in the art. In the RTTI technology, the size of each block remains unchanged while the TTI is reduced to 10 ms by using a plurality of time slots, for example, a multi-slot bandwidth is increased in a time domain. Referring to FIG. 1, a block 101 is a BTTI block, that is, the block 101 is composed of 4 bursts assigned in 4 continuous TDMA frames, and a block 102 is a block using the RTTI technology, and is composed of 4 bursts assigned in 2 continuous TDMA frames. As known in FIG. 1, the TTI is reduced to 10 ms through the RTTI technology.

Correspondingly, in order to reduce the data transmission delay and to notify as soon as possible the data sender whether the data receiver has received the RLC data blocks sent from the data sender, the data receiver may add a piggybacked acknowledgement/non-acknowledgement (PAN), instead of a Acknowledgement/Non-acknowledgement (Ack/Nack), into the RLC/media access control (MAC) data blocks, so as to notify the data sender whether the MAC data blocks are received. Currently, two types of PANs, i.e. a starting sequence number (SSN) based PAN and a time-based PAN, are provided. As for the SSN-based PAN in a downlink direction, a PAN included in an RLC/MAC data block sent from a network side to a terminal shall include a temporary flow identity (TFI). For the SSN-based PAN in an uplink direction, only when both the network side and the terminal support multiple temporary block flow (TBF), will the PAN included in the RLC/MAC data block sent from the terminal to the network side include the TFI. In contrast, if any party of the network side and the terminal does not support the multiple TBF, the PAN in the uplink direction does not include the TFI. The time-based PAN is only used in the downlink direction and does not include the TFI.

However, two or more terminals may be multiplexed in a same channel, for example, a packet data channel (PDCH), but not all the terminals multiplexed in the same channel may employ a same type of PAN. In this manner, the types of the PANs sent from the network side to the terminals that are multiplexed in the same channel may be different. Thus, if the network side does not give any indication on what the type of a PAN transmitted in the downlink direction is, the terminals cannot figure out whether the PAN is an SSN-based PAN or a time-based PAN. In this case, the terminals may perform a decoding on the PAN by randomly determining the received PAN as an SSN-based PAN or a time-based PAN. If the selected type of PAN is not the type of PAN adopted by the terminal, even though the decoding is successful, the obtained feedback information by the terminal may not be the required information. For example, the network side returns an SSN-based PAN and a time-based PAN to a terminal currently only using the SSN-based PAN and a terminal currently only using the time-based PAN respectively; at the same time, it is assumed that, the value of the TFI received by the terminal currently only using the SSN-based PAN is zero, and the terminal firstly performs a verification check on the time-based PAN. At this time, the terminal performs an Exclusive-OR (XOR) operation with a cyclic redundancy check (CRC) in the time-based PAN by using the TFI value of zero. Because an XOR operation between zero and the CRC results in the CRC itself, the time-based PAN passes the check and the terminal thus determines that the time-based PAN belongs to itself. However, the feedback information obtained by the terminal in fact does not belong to the terminal.

Till now, there is no technical solution capable of correctly distinguishing the PANs. "Dicussion on Fast Ack/Nack Report" discloses an improvement on PAN. The address field is defined to include a TFI sequence number of any one of the TFIs assigned and activated for one MS in one direction. One indication bit in PAN is added to indicate whether the address field is in the procedure of being updated because of the establishment of new TBFs. The indicator is 1 bit and when the value is set to 1 the MS has initiated the procedure to update the address and the address field shall be in a 5 bits TFI format. Value 0 means that the TFI sequence number procedure is completed and the address field shall be in TFI sequence number format.

### SUMMARY

The present invention provides a method for assigning TFIs, a method for distinguishing feedback information, and a feedback method of an SSN-based PAN and a feedback device thereof, so that terminals multiplexed in a same channel can obtain correct feedback information.

According to a first aspect the present invention, a method for distinguishing feedback information is including: receiving, by a terminal, a temporary flow identity, TFI, which is exclusively non-zero, assigned from a network side; receiving, by the terminal, feedback information comprising a starting sequence number-based, SSN-based, piggybacked acknowledgement/non-acknowledgement, PAN; according to the non-zero TFI, assigned from a network side, performing, by the terminal, a verification check on the received feedback information; determining, by the terminal, that the received feedback information corresponds to the terminal and corresponds to an uplink temporary block flow in response to which the PAN is fed back, if the received feedback information passes the verification check; and wherein the performing a verification check includes: performing an Exclusive-OR, XOR, operation between the non-zero TFI and a cyclic redundancy check, CRC, obtained from the received feedback information to have a first new CRC; obtaining, according to a generator polynomial and the information other than the non-zero TFI included in the received feedback information, a second new CRC; and determining that the received feedback information passes the verification check, if it is determined that the first new CRC equals to the second new CRC.

According to a second aspect the present invention, an apparatus for distinguishing feedback information is including: means for receiving a temporary flow identity, TFI, which is exclusively non-zero, assigned from a network side; means for receiving feedback information comprising a starting sequence number-based, SSN-based, piggybacked acknowledgement/non-acknowledgement, PAN; means for performing a verification check on the received feedback information according to the non-zero TFI, assigned from a network side; means for determining that the received feedback information corresponds to the terminal and corresponds to an uplink temporary block flow in response to which the PAN is fed back, if the received feedback information passes the verification check; and wherein the means for performing a verification check on the received feedback information includes: means for performing an Exclusive-OR, XOR, operation between the non-zero TFI and a cyclic redundancy check, CRC, obtained from the received feedback information to have a first new CRC; means for obtaining, according to a generator polynomial and the information other than the non-zero TFI included in the received feedback information, a second new CRC; and means for determining that the received feedback information passes the verification check, if it is determined that the first new CRC equals to the second new CRC.

In some implementation forms of the invention, the TFI assigned by the network side to each uplink TBF using the SSN-based PAN feedback information of the terminal is not zero, and in this manner, the terminal using the SSN-based PAN fails to check the feedback information having the time-based PAN, so as to avoid obtaining the feedback information that does not belong to the terminal due to the successful check, thereby ensuring that the terminals multiplexed in a same channel obtain correct feedback information.

### BRIEF DESCRIPTION OF THE DRAWINGS

FIG. 1 is a simplified schematic diagram illustrating an RTTI on a time domain in the prior art;
FIG. 2A is a simplified schematic diagram of a method for assigning TFIs according to an embodiment of the present invention;
FIG. 2B is a simplified schematic diagram of a feedback method of an SSN-based PAN according to a first embodiment of the present invention;
FIG. 3 is a simplified schematic diagram illustrating a processing procedure before feedback information is added to an RLC/MAC data block in FIG. 2B;
FIG. 4 is a simplified schematic diagram illustrating an SSN-based PAN according to an embodiment of the present invention;
FIG. 5 is a simplified schematic diagram of a method for distinguishing feedback information according to a first embodiment of the present invention;
FIG. 6 is a simplified schematic diagram illustrating a checking process in FIG. 5;
FIG. 7 is a simplified schematic diagram of the feedback method of the PAN based on the SSN according to a second embodiment of the present invention;
FIG. 8 is a simplified schematic diagram illustrating a processing procedure before feedback information is added to an RLC/MAC data block in FIG. 7;
FIG. 9 is a simplified schematic diagram of the method for distinguishing the feedback information according to a second embodiment of the present invention; and
FIG. 10 is a simplified schematic diagram illustrating a checking process in FIG. 9.

### DETAILED DESCRIPTION

Referring to FIG. 2A, an embodiment of a method for assigning TFIs according to the present invention is described herein. As shown in FIG. 2A, the method includes the following.

In Block S201A, a non-zero TFI is assigned to each uplink TBF of a terminal using PAN feedback. The terminal uses an SSN-based PAN and is multiplexed in a channel with one or more other terminals.

In practice, the network side may receive TBFs sent from a plurality of terminals, and each terminal may send a plurality of TBFs. Before each terminal sends the TBF(s) to the network side, the network side needs to assign the TFIs to the TBFs, in which one TFI may be assigned to each TBF of each terminal, and the TFIs are different from each other. As for the terminal being multiplexed in the same channel with one or more other terminals, the TFI assigned by the network side to a TBF of the terminal is not zero. In addition, the one or more other terminals being multiplexed in the same channel with the terminal may be terminals using either a time-based PAN or an SSN-based PAN. If the one or more other terminals are terminals using the SSN-based PAN, the TFIs assigned to the one or more other terminals for each uplink TBF using PAN feedback are also not zero. In a word, the TFI assigned by the network side to the terminal for a TBF using the SSN-based PAN and being multiplexed with the one or more other terminals in the same channel is not zero.

In Block S202A, the non-zero TFIs are provided to the terminal.

After a TFI has been assigned to one terminal, the TFI may be provided to the terminal. Specifically, after the TFI has already been assigned to one terminal for one TBF, the TFI may be provided to the terminal. Alternatively, after the TFIs have been assigned to one terminal for all the TBFs, all the TFIs may also be provided to the terminal. After obtaining the TFIs, the terminal sends the corresponding TBFs to the network side.

The embodiment of the method for assigning the TFIs may be implemented by various devices. Among these devices, a device for assigning TFIs may include a TFI assigning unit and a TFI providing unit. The TFI assigning unit is configured to assign a TFI that is not zero to a terminal for each uplink TBF using PAN feedback. The terminal uses an SSN-based PAN and is multiplexed in a same channel with one or more other terminals. The TFI providing unit is configured to provide the non-zero TFI to the terminal.

For the terminal that uses the SSN-based PAN and is multiplexed in the same channel with the one or more other terminals, the TFI assigned by the TFI assigning unit to each TBF of the terminal is not zero. In addition, the one or more other terminals being multiplexed in the same channel with the terminal may be terminals using a time-based PAN or terminals using an SSN-based PAN. If the one or more other terminals are the terminals using the SSN-based PAN, the TFI assigned by the TFI assigning unit to the one or more other terminals' each uplink TBF using a PAN feedback is not zero. In a word, the TFI assigned by the TFI assigned unit to each TBF of the terminal using the SSN-based PAN and being multiplexed in the same channel with the one or more other terminals is not zero.

After the TFI assigning unit has assigned the TFI to one terminal, the TFI providing unit may provide the TFI to the terminal. Specifically, after the TFI assigning unit has assigned a TFI to one TBF of one terminal, the TFI providing unit may provide the TFI to the terminal. Alternatively, after the TFI assigning unit has assigned TFIs to all the TBFs of one terminal, the TFI providing unit may also provide all the TFIs to the terminal. Once obtaining the TFIs, the terminal sends the corresponding TBFs to the network side.

It should be noted that the device for assigning the TFIs may be disposed at or applied to the network side. After receiving the TBFs, the network side needs to feed back receiving situations to the terminal. Referring to FIG. 2B, a first embodiment of a feedback method of an SSN-basedPAN is described. As shown in FIG. 2B, the method includes the following.

In Block S201B, feedback information having an SSN-based PAN is added to an RLC/MAC data block, in which a TFI carried in the feedback information is a TFI corresponding to a terminal that shall decode the feedback information, and the TFI is not zero.

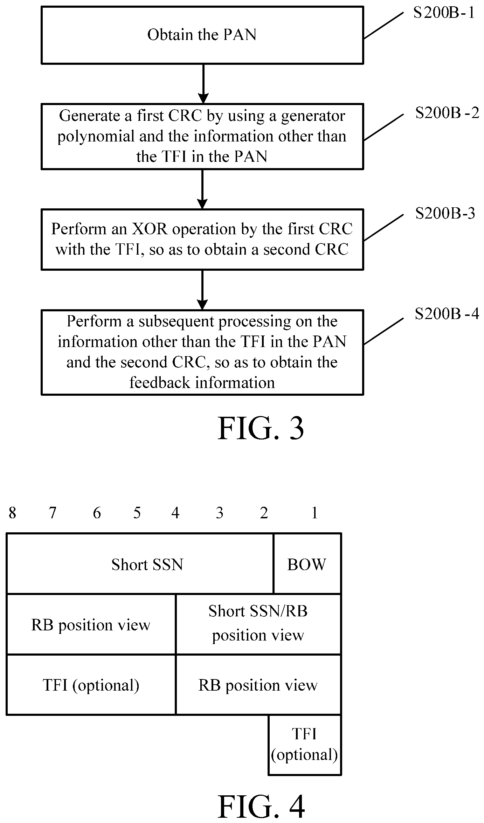

Before the feedback information is added into the RLC/MAC data block, the following steps as shown in FIG. 3 may be performed.

In Block S200B-1, the PAN is obtained.

A structure of the SSN-based PAN is as shown in FIG. 4. The PAN includes a beginning of window (BOW) of 1 bit, a short SSN of 7-11 bits, a TFI of 5 bits, and a reported bitmap (RB) field of 8-14 bits. As shown in FIG. 4, a length of the TFI is 5 bits, and a length of the other information except the TFI in the PAN may be 20 bits. Certainly, the length of each field may be adjusted according to practical application scenarios.

In Block S200B-2, a first CRC is generated by using a generator polynomial and the information other than the TFI in the PAN.

The generator polynomial may be in a form of D⁶ + D⁵ + D⁴ + D³ + D² + D¹ + 1, or in other forms. The generator polynomial performs an operation with the other information of 20 bits except the TFI in the PAN, so as to obtain the CRC of 6 bits. For the convenience of description, the CRC herein is called the first CRC. It should be noted that, the form of the generator polynomial may decide the length of the CRC. For example, if the generator polynomial is D¹⁰ + D⁹ + D⁵ + D⁴ + D¹ + 1, a CRC of 10 bits may be obtained.

In Block S200B-3, the first CRC performs an XOR operation with the TFI to obtain a second CRC.

If the length of the first CRC is 6 bits, and the length of the TFI is 5 bits, the last 5 bits of the first CRC perform the XOR operation with the TFI, and the remaining first bit of the first CRC may not be processed. Certainly, if there is an agreement, any 5 bits of the first CRC, instead of the last 5 bits, may be assigned to perform the XOR operation with the TFI. After the first CRC performs the XOR operation with the TFI, a new CRC is obtained.

For the convenience of description, the new CRC herein is called the second CRC. If the length of the first CRC is another value, it may be agreed that 5 bits in the first CRC perform the XOR operation with the TFI, and the other bits are not processed, so as to obtain the new CRC, i.e. the second CRC.

In Block S200B-4, a subsequent processing is performed on the information other than the TFI in the PAN and the second CRC, so as to obtain the feedback information. The subsequent processing includes a convolutional coding process.

It should be noted that, although the TFI does not explicitly exist in the feedback information, through the above series of processing, the TFI has implicitly existed in the feedback information.

After Block S201B, Block S202B is performed, in which the RLC/MAC data block carrying the feedback information is sent in a same channel where the terminal that is expected to decode the feedback information is multiplexed with one or more other terminals.

If the terminal that is expected to decode the feedback information is multiplexed in the same channel with the one or more other terminals, the RLC/MAC data block needs to be sent through the channel, so that the terminal that is expected to decode the feedback information and the one or more other terminals being multiplexed in the same channel will receive the RLC/MAC data block, and will also obtain the feedback information carried in the RLC/MAC data block.

The first embodiment of the feedback method of the SSN-based PAN may be implemented by various devices. Among these devices, a device may include a feedback information adding unit and an RLC/MAC data block sending unit. The feedback information adding unit is configured to add feedback information having an SSN-based PAN into an RLC/MAC data block, in which a TFI carried in the feedback information is a TFI corresponding to a terminal that is expected to decode the feedback information, and the TFI is not zero. The RLC/MAC data block sending unit is configured to send the RLC/MAC data block carrying the feedback information through the same channel where the terminal that is expected to decode the feedback information is multiplexed with one or more other terminals after being processed by the feedback information adding unit.

The embodiment of the device further includes a PAN obtaining unit, a CRC generating unit, and a feedback information obtaining unit. The PAN obtaining unit is configured to obtain the PAN before the feedback information adding unit adds the SSN-based PAN into the RLC/MAC data block. The CRC generating unit is configured to generate a first CRC by using a generator polynomial and other information except the TFI in the PAN obtained by the PAN obtaining unit, and to enable the first CRC to perform an XOR operation with the TFI to obtain a second CRC. The feedback information obtaining unit is configured to perform a subsequence processing on the other information except the TFI in the PAN obtained by the PAN obtaining unit and the second CRC generated by the CRC generating unit, thereby obtaining the feedback information.

All the terminals being multiplexed in the same channel will obtain the feedback information carried in the same RLC/MAC data block. Therefore, each terminal needs to determine which feedback information belongs to the terminal itself so as to know whether the network side has received the TBFs.

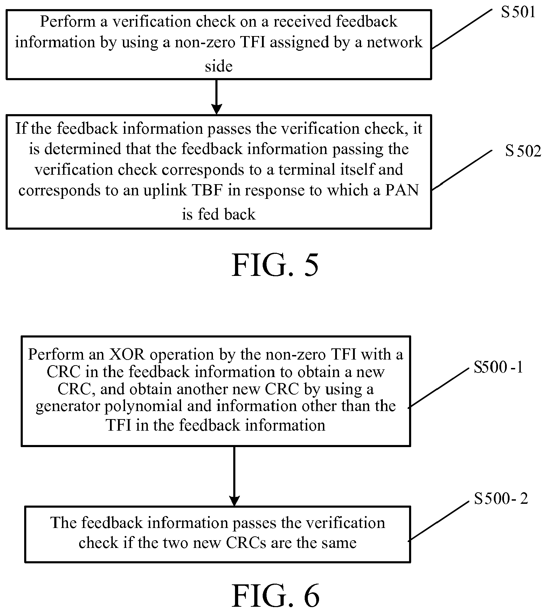

Referring to FIG. 5, a first embodiment of a method for distinguishing feedback information is described. As shown in FIG. 5, the method includes the following.

In Block S501, a verification check is performed on received feedback information by using a non-zero TFI assigned by a network side.

Referring to FIG. 6, the verification check process includes the following.

In Block S500-1, to obtain a new CRC, an XOR operation is performed between the non-zero TFI and agreed bits of a CRC in the feedback information and the other bits of the CRC remain unchanged, in which the method is the same as that described in Block S200B-3.

If a length of the TFI is 5 bits, and a length of the CRC in the feedback information is 6 bits, the TFI may perform the XOR operation with the last 5 bits of the CRC in the feedback information. Certainly, if agreed, the TFI may perform the XOR operation with 5 assigned bits of the CRC in the feedback information, instead of the last 5 bits thereof.

The generator polynomial is the same as that used in Block S200B-2, which may be in a form of D⁶ + D⁵ + D⁴ + D³ + D² + D¹ + 1, or in other forms. If a length of the other information except the TFI in the PAN is 20 bits, after the generator polynomial performs an operation with the other information of 20 bits, the CRC of 6 bits may be obtained. It shall be noted that the form of the generator polynomial may decide the length of the CRC.

In addition, although this Block needs to generate two new CRCs, the two new CRCs do not necessarily have a generating sequence there-between.

In Block S500-2, if the two new CRCs are the same, the feedback information passes the verification check.

Apparently, if the two new CRCs are different, the feedback information fails to pass the verification check.

After Block S501, Block S502 is performed, in which if the feedback information passes the verification check, it is determined that the feedback information passing the verification check corresponds to a terminal itself and corresponds to an uplink TBF in response to which a PAN is fed back.

Each SSN-based PAN only corresponds to one TBF, so that if the feedback information fails to pass the verification check, the feedback information failing to pass the verification check is not the feedback information corresponding to the TBF. In this case, the terminal continues to perform the check on the received feedback information by using the TFIs corresponding to other TBFs. If all the corresponding feedback information fails to pass the verification check, the PAN is not for the terminal.

The first embodiment of the method for distinguishing the feedback information may be implemented by various forms of devices, and a device for distinguishing feedback information includes a checking unit and a PAN type determining unit. The checking unit is configured to perform a verification check on received feedback information by using a non-zero TFI assigned by a network side. The PAN type determining unit is configured to determine that the feedback information passing the verification check corresponds to a terminal itself and corresponds to an uplink TBF in response to which a PAN is fed back, when the checking unit determines that the feedback information passes the verification check.

The checking unit further includes a CRC generating unit and a checking result generating unit. The CRC generating unit is configured to enable the TFI that is not zero to perform an XOR operation with a CRC in the feedback information to obtain a new CRC, and obtain another new CRC by using a generator polynomial and other information except the TFI in the feedback information. The checking result generating unit is configured to generate a verification check passing result if the two new CRCs generated by the CRC generating unit are the same.

It should be noted that, each unit of the device for distinguishing feedback information may be disposed in or applied to a terminal, especially a terminal using an SSN-based PAN and being multiplexed in the same channel with one or more other terminals, and operating manners of the units in the terminal are the same as the operating manners in the device for distinguishing feedback information, so that the descriptions thereof are omitted.

In the embodiments corresponding to Figures 2A, 2B and 5, the network side assigns the TFI that is not zero to each TBF of the terminal using the SSN-based PAN, and after the network side delivers the feedback information having the SSN-based PAN and/or the feedback information having the time-based PAN, each terminal can perform a verification check on any type of the feedback information. As for the terminal currently only using the SSN-based PAN, if the terminal performs a verification check on the feedback information having the time-based PAN, the TFI of the terminal is not zero, so the new CRC obtained after the TFI of the terminal performs the XOR operation with the CRC in the feedback information having the time-based PAN is different from the new CRC obtained by using the generator polynomial and the other information except the TFI in the feedback information. In this manner, the feedback information fails to pass the verification check, which represents that the feedback information is not the feedback information having the SSN-based PAN, but the feedback information having the time-based PAN. Certainly, if the terminal performs a verification check on the feedback information having the SSN-based PAN, and if the TFIs are the same, the verification check is successful. As for the terminal currently only using the time-based PAN, if the terminal performs a verification check on the feedback information having the SSN-based PAN, the feedback information fails to pass the verification check. If the terminal performs a verification check on the feedback information having the time-based PAN, the feedback information passes the verification check. In this way, as long as the network side assigns the TFI that is not zero to each TBF of the terminal using the SSN-based PAN, the terminal can find out the feedback information that belongs to the terminal itself, and the situation that the feedback information passes the verification check but does not belong to the terminal itself does not exist.

In the embodiments corresponding to Figures 2A, 2B and 5, as long as the TFI assigned by the network side to the terminal using the SSN-based PAN is not zero, it is ensured that the terminal can correctly distinguish the received PANs. During practical applications, there are still other manners for ensuring that the terminal can correctly distinguish the received PANs. An example is given below for descriptions.

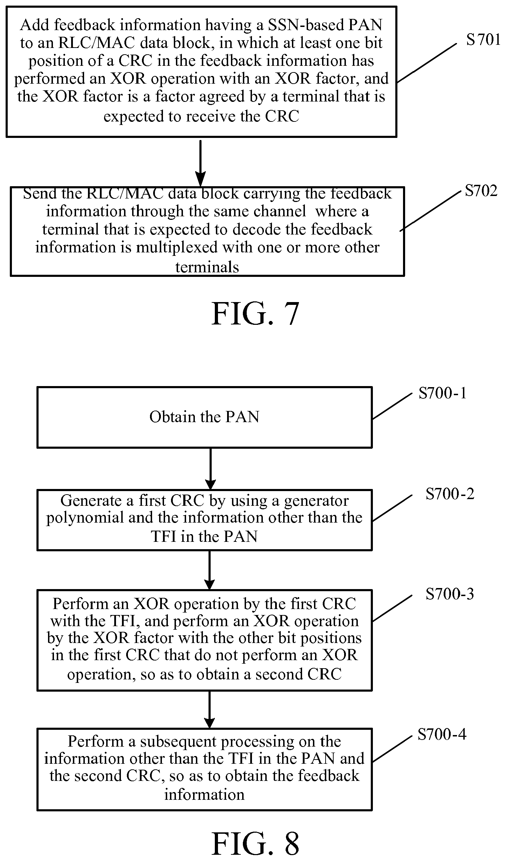

Referring to FIG. 7, a second embodiment of the feedback method of an SSN-based PAN according to the present invention is described as follows. As shown in FIG. 7, the method includes the following.

In Block S701, feedback information having an SSN-based PAN is added into an RLC/MAC data block, in which at least one bit field of a CRC in the feedback information has performed an XOR operation with an XOR factor. The XOR factor is a factor agreed by a terminal that is expected to receive the CRC.

Before the feedback information having the SSN-based PAN is added into the RLC/MAC data block, the following steps as shown in FIG. 8 may be performed.

In Block S700-1, the PAN is obtained.

In Block S700-2, a first CRC is generated by using a generator polynomial and information other than the TFI in the PAN.

In Block S700-3, the first CRC performs an XOR operation with the TFI, and the XOR factor performs an XOR operation with the other bit fields in the first CRC that do not perform an XOR operation to obtain a second CRC.

Generally, the length of the TFI is less than that of the CRC by one or more bit fields, and after the CRC performs the XOR operation with the TFI, at least one bit field in the CRC is not processed. Thus, the XOR factor agreed by the terminal is adopted to perform an XOR operation with the bit fields that are not processed in the CRC. If a length of the XOR factor is the same as the number of the bit fields that are not processed in the CRC, the XOR factor directly performs the XOR operation with the bit fields that are not processed in the CRC. If the number of the bit fields of the XOR factor is less than that of the bit positions that are not processed in the CRC, the XOR factor performs the XOR operation with the number of bit fields the same as that of the XOR factor among the bit fields that are not processed in the CRC in an agreed manner.

It is assumed that the length of the TFI is 5 bits, the length of the first CRC is 6 bits, and the length of the XOR factor is 1 bit. The last 5 bits in the first CRC perform the XOR operation with the TFI, and the XOR factor performs the XOR operation with the first bit in the first CRC.

In Block S700-4, a subsequent processing is performed on the other information except the TFI in the PAN and the second CRC, so as to obtain the feedback information.

It should be noted that, although the TFI does not explicitly exist in the feedback information, through the above series of processing, the TFI has implicitly existed in the feedback information.

After Block S701, Block S702 is performed, in which the RLC/MAC data block carrying the feedback information is sent in a same channel where a terminal that is expected to decode the feedback information is multiplexed with one or more other terminals. If the terminal that is expected to decode the feedback information is multiplexed in a same channel with the one or more other terminals, the RLC/MAC data block shall be sent through the channel. Consequently, the terminal that is expected to decode the feedback information and the one or more other terminals being multiplexed in the same channel are expected to receive the RLC/MAC data block and to obtain the feedback information carried in the RLC/MAC data block.

The second embodiment of the feedback method of an SSN-based PAN may be implemented by various devices. Among these devices, a feedback device of an SSN-based PAN includes a feedback information adding unit and an RLC/MAC data block sending unit. The feedback information adding unit is configured to add feedback information having an SSN-based PAN to an RLC/MAC data block, in which at least one bit field of a CRC in the feedback information has performed an XOR operation with an XOR factor, and the XOR factor is a factor agreed by a terminal that is expected to receive the feedback information. The RLC/MAC data block sending unit is configured to send the RLC/MAC data block, which is processed by the feedback information adding unit and is carrying the feedback information, through the same channel in which a terminal that shall decode the feedback information is multiplexed with one or more other terminals.

The feedback device of an SSN-based PAN further includes a PAN obtaining unit, a CRC generating unit, and a feedback information obtaining unit. The PAN obtaining unit is configured to obtain the PAN before the feedback information adding unit adds the feedback information having the SSN-based PAN into the RLC/MAC data block. The CRC generating unit is configured to generate a first CRC by using a generator polynomial and other information except the TFI in the PAN obtained by the PAN obtaining unit, and enable the first CRC to perform an XOR operation with the TFI, and enable the XOR factor to perform an XOR operation with bit fields in the first CRC that do not perform the XOR operation, so as to obtain a second CRC. The feedback information obtaining unit is configured to perform a subsequence processing on the other information except the TFI in the PAN obtained by the PAN obtaining unit and the second CRC generated by the CRC generating unit, thereby obtaining the feedback information.

All the terminals being multiplexed in the same channel obtain the feedback information carried in the same RLC/MAC data block, so that each terminal needs to determine which feedback information belongs to the terminal itself so as to acquire whether the network side has received the TBF.

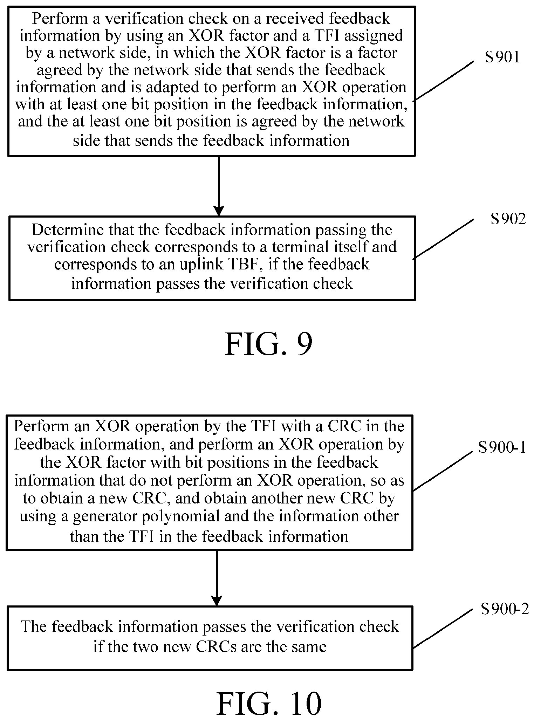

Referring to FIG. 9, a second embodiment of the method for distinguishing feedback information according to the present invention is described. As shown in FIG. 9, the method includes the following.

In Block S901, a verification check is performed on received feedback information by using an XOR factor and a TFI assigned by a network side, in which the XOR factor is a factor agreed by the network side that sends the feedback information and is configured to perform an XOR operation with at least one bit field in the feedback information, and the at least one bit fields is agreed by the network side that sends the feedback information.

Referring to FIG. 10, the verification check process includes the following Blocks.

In Block S900-1, the TFI performs an XOR operation with a CRC in the feedback information, and the XOR factor performs an XOR operation with bit fields in the feedback information that do not perform an XOR operation to obtain a new CRC, and another new CRC is obtained by using a generator polynomial and the information other than the TFI in the feedback information.

If a length of the XOR factor is the same as the number of the bit fields that are not processed in the CRC, the XOR factor directly performs the XOR operation with the bit fields that are not processed in the CRC. If the number of the bit fields of the XOR factor is less than that of the bit fields that are not processed in the CRC, the XOR factor performs the XOR operation with the number of bit positions the same as that of the XOR factor among the bit fields that are not processed in the CRC in an agreed manner.

It is assumed that the length of the TFI is 5 bits, the length of the first CRC is 6 bits, and the length of the XOR factor is 1 bit. The last 5 bits in the first CRC perform the XOR operation with the TFI, and the XOR factor performs the XOR operation with the first bit in the first CRC.

In Block S900-2, if the two new CRCs are the same, the feedback information passes the verification check.

Apparently, if the two new CRCs are different, the feedback information fails to pass the verification check.

After Block S901, Block S902 is performed, in which if the feedback information passes the verification check, it is determined that the feedback information passing the verification check corresponds to a terminal itself and corresponds to an uplink TBF in response to which a PAN is fed back.

Each SSN-based PAN only corresponds to one TBF, so that if the feedback information fails to pass the verification check, the feedback information failing to pass the verification check is not the feedback information corresponding to the TBF. In this case, the terminal continues to perform the check on the feedback information by using the TFIs corresponding to other TBFs. If all the corresponding feedback information fails to pass the verification check, the PAN is not for the terminal.

The second embodiment of the method for distinguishing feedback information may be implemented by various devices. Among these devices, a device for distinguishing feedback information includes a checking unit and a PAN type determining unit. The checking unit is configured to perform a verification check on received feedback information by using an XOR factor and a TFI assigned by a network side, in which the XOR factor is a factor agreed by the network side that sends the feedback information and is configured to perform an XOR operation with at least one bit field in the feedback information, and the at least one bit field is agreed by the network side that sends the feedback information. The PAN type determining unit is configured to determine that the feedback information passing the verification check corresponds to a terminal itself and corresponds to an uplink TBF in response to which a PAN is fed back, when the checking unit determines that the feedback information passes the verification check.

The checking unit further includes a CRC generating unit and a checking result generating unit. The CRC generating unit is configured to enable the TFI to perform an XOR operation with the CRC in the feedback information, and enable the XOR factor to perform an XOR operation with bit fields that do not perform an XOR operation in the feedback information, so as to obtain a new CRC, and obtain another new CRC by using a generator polynomial and other information except the TFI in the feedback information. The checking result generating unit is configured to generate a verification check passing result if the two new CRCs generated by the CRC generating unit are the same.

In the embodiments corresponding to Figures 7 and 9, the network side and the terminal agree on the XOR factor and the bit fields in the feedback information that should perform the XOR operation with the XOR factor. After the network side delivers the feedback information having an SSN-based PAN and the feedback information having a time-based PAN, each terminal can perform a verification check on any type of the feedback information. As for the terminal currently only using the SSN-based PAN and having a value of the TFI that is zero, if the terminal performs a verification check on the feedback information having the time-based PAN, the TFI having the value of zero performs an XOR operation with the CRC in the feedback information having the time-based PAN, and as a result, the values of the bit fields in the CRC for performing the XOR operation still remain unchanged. But the XOR factor of the terminal further performs an XOR operation with the corresponding bit fields in the CRC that do not perform an XOR operation, and thus the obtained new CRC is changed relative to the former CRC. Thus, the feedback information having the time-based PAN fails to pass the verification check, which represents that the feedback information is the feedback information having the time-based PAN, instead of the feedback information having the SSN-based PAN. If the terminal performs a verification check on the feedback information having the SSN-based PAN, and if the TFIs are the same, the verification check is successful. As for the terminal currently only using the time-based PAN, if the terminal performs a verification check on the feedback information having the SSN-based PAN, the feedback information fails to pass the verification check. If the terminal performs a verification check on the feedback information having the time-based PAN, the feedback information passes the verification check. In this way, as long as the network side and the terminal agree on the XOR factor and the bit fields that should perform the XOR operation with the XOR factor in the PAN, the terminal can find out the feedback information that is of the terminal itself, and the situation that the feedback information passes the verification check but is not of the terminal itself does not exist.

Those of ordinary skill in the art can understand that, the methods described in the above embodiments may be implemented by using computer program to instruct relevant hardware, and the program may be stored in a computer-readable storage medium. When the program is executed, the flows of the methods according to the embodiments are performed. The storage medium may be a magnetic disc, an optical disk, a read only memory (ROM), or a random access memory (RAM) etc.

The above descriptions are merely some exemplary embodiments of the present invention. It will be apparent to those skilled in the art that various modifications and variations can be made to the embodiments described herein in accordance with the appended claims.

## Claims

1. A method for distinguishing feedback information, comprising:
receiving, by a terminal, a temporary flow identity, TFI, which is non-zero, assigned from a network side;
receiving, by the terminal, feedback information comprising a starting sequence number-based, SSN-based, piggybacked acknowledgement/non-acknowledgement, PAN;
according to the non-zero TFI, assigned from a network side, performing (S501), by the terminal, a verification check on the received feedback information;
determining (S502), by the terminal, that the received feedback information corresponds to the terminal and corresponds to an uplink temporary block flow in response to which the PAN is fed back, if the received feedback information passes the verification check; and
**characterized in that** the performing a verification check comprises:
performing (S500-1) an Exclusive-OR, XOR, operation between the non-zero TFI and a cyclic redundancy check, CRC, obtained from the received feedback information to have a first new CRC;
obtaining, according to a generator polynomial and the information other than the non-zero TFI included in the received feedback information, a second new CRC; and
determining (S500-2) that the received feedback information passes the verification check, if it is determined that the first new CRC equals to the second new CRC.

2. An apparatus for distinguishing feedback information, comprising:
means for receiving a temporary flow identity, TFI, which is non-zero, assigned from a network side;
means for receiving feedback information comprising a starting sequence number-based, SSN-based, piggybacked acknowledgement/non-acknowledgement, PAN;
means for performing a verification check on the received feedback information according to the non-zero TFI, assigned from a network side;
means for determining that the received feedback information corresponds to the terminal and corresponds to an uplink temporary block flow in response to which the PAN is fed back, if the received feedback information passes the verification check; and
**characterized in that** the means for performing a verification check on the received feedback information comprises:
means for performing an Exclusive-OR, XOR, operation between the non-zero TFI and a cyclic redundancy check, CRC, obtained from the received feedback information to have a first new CRC;
means for obtaining, according to a generator polynomial and the information other than the non-zero TFI included in the received feedback information, a second new CRC; and
means for determining that the received feedback information passes the verification check, if it is determined that the first new CRC equals to the second new CRC.

## Patentansprüche

1. Verfahren zur Unterscheidung von Rückführungsinformation, umfassend:
Empfangen, durch ein Endgerät, einer zeitweiligen Flusskennung (Temporary Flow Identity, TFI), die nicht null ist, die von einer Netzwerkseite zugewiesen wird;
Empfangen, durch das Endgerät, von Rückführungsinformation, die eine Startsequenznummer-basierte (SNN-basierte) huckepack getragene Bestätigung/Nicht-Bestätigung (Piggybacked Acknowledgement/Non-Acknowledgement, PAN) umfasst;
gemäß der Nicht-Null-TFI, die von einer Netzwerkseite zugewiesen wird, Durchführen (S501), durch das Endgerät, einer Überprüfung der empfangenen Rückführungsinformation;
Bestimmen (S502), durch das Endgerät, dass die empfangene Rückführungsinformation dem Endgerät entspricht und einem temporären Uplink-Blockstrom entspricht, auf den die PAN als Reaktion zurückgeführt wird, wenn die empfangene Rückführungsinformation die Überprüfung erfolgreich durchläuft; und
**dadurch gekennzeichnet, dass** das Durchführen einer Überprüfung umfasst:
Durchführen (S500-1) einer Exklusiv-ODER(XOR)-Operation zwischen der Nicht-Null-TFI und einer zyklischen Redundanzprüfung (Cyclic Redundancy Check, CRC), die aus der empfangenen Rückführungsinformation erhalten wird, um eine erste neue CRC zu bekommen;
Erhalten, gemäß einem Generatorpolynom und der Information, die nicht die Nicht-Null-TFI ist, die in der empfangenen Rückführungsinformation enthalten sind, einer zweiten neuen CRC; und
Bestimmen (S500-2), dass die empfangene Rückführungsinformation die Überprüfung erfolgreich durchläuft, wenn bestimmt wird, dass die erste neue CRC der zweiten neuen CRC entspricht.

2. Vorrichtung zur Unterscheidung der Rückführungsinformation, umfassend:
Mittel zum Empfangen einer zeitweiligen Flusskennung (Temporary Flow Identity, TFI), die nicht null ist, die von einer Netzwerkseite zugewiesen wird;
Mittel zum Empfangen einer Rückführungsinformation, die eine Startsequenznummer-basierte (SNN-basierte) huckepack getragene Bestätigung/Nicht-Bestätigung (Piggybacked Acknowledgement/Non-Acknowledgement, PAN) umfasst;
Mittel zum Durchführen einer Überprüfung der empfangenen Rückführungsinformation gemäß der Nicht-Null-TFI, die von einer Netzwerkseite zugewiesen wird;
Mittel zum Bestimmen, dass die empfangene Rückführungsinformation dem Endgerät entspricht und einem temporären Uplink-Blockstrom entspricht, auf den die PAN als Reaktion zurückgeführt wird, wenn die empfangene Rückführungsinformation die Überprüfung erfolgreich durchläuft; und
**dadurch gekennzeichnet, dass** das Mittel zum Durchführen einer Überprüfung der empfangenen Rückführungsinformation umfasst:
Mittel zum Durchführen einer Exklusiv-ODER(XOR)-Operation zwischen der Nicht-Null-TFI und einer zyklischen Redundanzprüfung (Cyclic Redundancy Check, CRC), die aus der empfangenen Rückführungsinformation erhalten wird, um eine erste neue CRC zu bekommen;
Mittel zum Erhalten, gemäß einem Generatorpolynom und der Information, die nicht die Nicht-Null-TFI ist, die in der empfangenen Rückführungsinformation enthalten sind, einer zweiten neuen CRC; und
Mittel zum Bestimmen, dass die empfangene Rückführungsinformation die Überprüfung erfolgreich durchläuft, wenn bestimmt wird, dass die erste neue CRC der zweiten neuen CRC entspricht.

## Revendications

1. Procédé permettant de distinguer des informations de rétroaction, comprenant les étapes consistant à :
recevoir, par un terminal, une identité de flux temporaire, TFI, qui est non nulle, attribuée à partir d'un côté de réseau ;
recevoir, par le terminal, des informations de rétroaction comprenant un accusé de réception/accusé de réception négatif superposé, PAN, basé sur un numéro de séquence de départ, basé sur SSN ;
en fonction de la TFI non nulle, attribuée à partir d'un côté de réseau, exécuter (S501), par le terminal, un contrôle de vérification sur les informations de rétroaction reçues ; déterminer (S502), par le terminal, que les informations de rétroaction reçues correspondent au terminal et correspondent à un flux de bloc temporaire de liaison montante en réponse auquel le PAN est renvoyé, si les informations de rétroaction reçues réussissent le contrôle de vérification ; et
**caractérisé en ce que** l'exécution d'un contrôle de vérification comprend les étapes consistant à :
exécuter (S500-1) une opération exclusive OR, XOR, entre la TFI non nulle et un contrôle de redondance cyclique, CRC, obtenue à partir des informations de rétroaction reçues pour avoir un premier CRC nouveau ;
obtenir, en fonction d'un générateur polynôme et des informations autres que la TFI non nulle comprises dans les informations de rétroaction reçues, un second CRC nouveau ; et
déterminer (S500-2) que les informations de rétroaction reçues réussissent le contrôle de vérification, si on détermine que le premier CRC nouveau est égal au second CRC nouveau.

2. Appareil permettant de distinguer des informations de rétroaction, comprenant :
des moyens pour recevoir une identité de flux temporaire, TFI, qui est non nulle, attribuée à partir d'un côté de réseau ;
des moyens pour recevoir des informations de rétroaction comprenant un accusé de réception/accusé de réception négatif superposé, PAN, basé sur un numéro de séquence de départ, basé sur SSN ;
des moyens pour exécuter un contrôle de vérification sur les informations de rétroaction reçues en fonction de la TFI non nulle, attribuée à partir d'un côté de réseau ;
des moyens pour déterminer que les informations de rétroaction reçues correspondent au terminal et correspondent à un flux de bloc temporaire de liaison montante en réponse auquel le PAN est renvoyé, si les informations de rétroaction reçues réussissent le contrôle de vérification ; et
**caractérisé en ce que** les moyens pour exécuter un contrôle de vérification sur les informations de rétroaction reçues comprennent :
des moyens pour exécuter une opération exclusive OR, XOR, entre la TFI non nulle et un contrôle de redondance cyclique, CRC, obtenue à partir des informations de rétroaction reçues pour avoir un premier CRC nouveau ;
des moyens pour obtenir, en fonction d'un générateur polynôme et des informations autres que la TFI non nulle comprise dans les informations de rétroaction reçues, un second CRC nouveau ; et
des moyens pour déterminer que les informations de rétroaction reçues réussissent le contrôle de vérification, si on détermine que le premier CRC nouveau est égal au second CRC nouveau.
